# EUROPEAN PATENT APPLICATION

(11) **EP 0 650 759 A1**
(43) Date of publication of application: **03.05.1995**
(21) Application number: 94203000.8
(22) Date of filing: 15.10.1994
(51) Int. Cl.: B01D 71/02

(54) **Method for forming an asymmetrical ceramic membrane**

(30) Priority: 29.10.1993 BE 9301199
(71) Applicant: VLAAMSE INSTELLING VOOR TECHNOLOGISCH ONDERZOEK, afgekort V.I.T.O., onderneming van openbaar nut onder de vorm van een n.v., B-2400 Mol (BE)
(72) Inventor: Adriansens, Walter, B-2400 Mol (BE); Doyen, Willy, B-2160 Wommelgem (BE); Leysen, Roger, B-2400 Mol (BE); Brauns, Etienne, B-2400 Mol (BE)
(74) Representative: Debrabandere, René

(57) **Abstract**

Method for forming an asymmetrical ceramic membrane, according to which a ceramic powder is applied on a porous carrier in a wet way and subsequently subject to a thermal treatment, characterized in that a suspension is made of the ceramic powder and an organic binder in a solvent in a weight ratio of the ceramic powder to the binder which is situated between 1 and 99, in that said suspension is applied on the porous carrier by means of film casting, in that the solvent is removed through extraction with a non-solvent, in that the binder is thermally removed and in that sintering is carried out.

## Description

The invention concerns a method for forming an asymmetrical ceramic membrane, according to which a ceramic powder is applied on a porous carrier in a wet way and subsequently subject to a thermal treatment.

Ceramic membranes with an asymmetrical top layer of ceramic powder particles are frequently used as filtering media, in particular for micro- and ultra-filtration, as these membranes retain their shape and show no perceptible deformations under normal pressures. Thanks to the asymmetrical shape, said membranes have a great permeability for a given thickness. Moreover, they can usually resist higher temperatures than organic membranes. They are only slowly eroded by the solid particles in the liquid to be filtered and can be made very hard. In a large number of cases they are highly resistant against corrosive chemical products.

The most usual methods to form an asymmetrical ceramic membrane in a wet way is according to the sol/gel technique, whereby several layers are applied in order to switch over from the relatively large pores of the porous carrier to the micro-pores at the surface of the membrane. The application of several layers must be carried out in several stages, which implies that these methods are time-consuming.

The invention aims to remedy this disadvantage and to provide a method for the formation of an asymmetrical membrane which is very simple and fast and which makes it possible to apply a ceramic asymmetrical layer, having the same characteristics as the multiple layers applied via the sol/gel technique, as a whole on the porous carrier through merely one application operation.

This aim is reached according to the invention as a suspension is made of the ceramic powder and an organic binder in a solvent in a weight ratio of the ceramic powder to the binder which is situated between 1 and 99, as said suspension is applied on the porous carrier by means of film casting, as the solvent is removed through extraction with a non-solvent, as the binder is thermally removed and as sintering is carried out.

The structure of the top layer on the porous carrier can be influenced through the selection and composition of the suspension and through the manner in which the solvent is removed.

Water can be used as a non-solvent.

In a practical embodiment of the invention, a tube is used as a porous carrier.

In a special embodiment of the invention, a carrier made of ceramic material is used as a porous carrier.

Other particularities and advantages of the invention will become clear from the following description of a method for forming an asymmetrical ceramic membrane according to the invention. This description is given as an example only and does not restrict the invention in any way.

In order to produce an asymmetrical ceramic membrane according to the invention, a suspension is made of a ceramic powder in a solution of a polymer binder in a solvent, said suspension is applied on a ceramic carrier, the membrane is formed through the removal of the solvent, the polymer is removed and sintering is carried out.

### Preparation of the suspension.

In the first place, the polymer, for example polysulphone, is dissolved in an organic solvent in a weight ratio of 1 up to 20% polymer in a mixing device with venting and cooling.

Ceramic powder is added to the mixture, in particular powders from the group of oxides, carbides, nitrides or mixtures thereof, for example aluminium oxide, with an average diameter of 0.05 to 5 micrometer in a weight ratio of ceramic powder to polymer situated between 1 and 99. The mixing is done in an appropriate mixing device. The manner of mixing depends on the viscosity of the suspension to be prepared, which in turn depends on the nature of the ceramic powder, the particle-size distribution of this powder, the fill factor of this powder in the suspension and the ratio of the polymer in relation to the solvent.

This viscosity may vary from 1,000 to maximum 1,000,000 mPa.s (centipoise). Suspensions with a higher or lower viscosity are not suitable to be applied on a ceramic carrier.

### Application of the suspension on a ceramic carrier.

The suspension is applied on a ceramic carrier by means of a casting bob according to the method described in "Desalination", 79(1990)163-179. This carrier can be made of an oxide, a carbide, a nitride or a mixture thereof. The ceramic carrier is mounted on a plate which can be moved down in a precipitation bath.

If use is made of a tube-shaped carrier, a round casting bob can be used with a diameter which is 50 to 500 micrometer smaller than the inner diameter of the ceramic carrier tube. By means of a drive mechanism, this carrier tube is lowered at a speed of 0.1 to 10 m/min., such that it is drawn on the casting bob which is suspended at the top by means of a wire. The casting bob hereby applies a homogenous suspension layer on the inner wall of the carrier tube.

Subsequently, the porous and coated carrier is led in a water bath where the membrane formation of the green product takes place through extraction of the solvent with a non-solvent. A suitable non-solvent is for example water. Hereafter, the carrier with the green product is rinsed with for example water. The remaining solvent is finally removed by means of a hot water treatment.

Naturally, in order to obtain a uniform suspension layer, the carrier tube has to be perfectly round on the inside with a maximum deviation of 50 micrometer.

### Thermal removal of the binder.

Subsequently, the binder, i.e. the polymer, is removed by means of a thermal treatment, also called calcination, under inert atmosphere.

During the thermal removal of the polymer, the temperature is allowed to rise at a speed between 10°C/h and 100°C/h. For the increase in temperature per time unit must be checked in order to prevent damage of the membrane layer due to the strong generation of gas as a result of the release of disintegration products of the polymer.

The thermal removal of the polymer is carried out at a temperature which varies between 300 and 800°C during a time period which varies between 30 minutes and 3 hours.

### Sintering

Of course, the temperature at which the ceramic powder particles are sintered together depends on the powder material. In order to sinter, the ceramic powder particles are heated up to a temperature which is higher than 0.4 times the melting temperature of the ceramic powder particles. If however, liquid phase sintering is applied, the sintering temperature may be lower.

The sintering is performed under oxidizing atmosphere, for example in the presence of air.

### EXAMPLE.

The invention will be further illustrated by means of the following example:

In a mixing device (High Speed Pendraulik TVD 10/S) with a 3-litre blender and connected to a vacuum pump (further type N726 FTE) were mixed 252 gram polysulphone (Amoco Chemicals type Udel P 1800 NT11) and 1148 gram N-methyl-2-pyrrolidone (Janssen Chimica type 14.9322.91) at 2000 r/min. during 18 minutes.

Further mixing was done at a lower rotation speed (465 r/min.) while venting was carried out by means of a vacuum pump during 18 min.

The thus obtained yellow viscous solution which had a temperature of about 70°C and which was free of air bells was collected in a glass storage bottle.

In a planetary ball mill (type Retsch) were added 61.3 gram polymer/solvent solution and 99.2 gram aluminium oxide (type CS 400M) in a teflon 250 ml blinder filled with 12 aluminium oxide balls having a diameter of 10 mm respectively.

Subsequently, they were respectively mixed as follows:
5 min. at 100 r/min.
120 min. at 200 r/min.
30 min. at 260 r/min.
120 min. at 100 r/min.
30 min. at 50 r/min.

This suspension was subsequently applied on a round ceramic carrier tube of aluminium oxide by means of a casting bob with a diameter of 5.6 mm. This carrier tube had a porosity of 40%, an average pore size of 3.5 micrometer, an outer diameter of 10 mm, an inner diameter of 6 mm with a deviation which is smaller than 50 micrometer and a length of 500 mm. On this carrier tube was cast 5 millimetre of the suspension, while the carrier tube opposite the casting bob was moved at a speed of 3 m/min. The coated carrier tube was led at the same speed into a water bath at room temperature.

After lingering 2 minutes in this water bath, the carrier tube was rinsed with water at room temperature during 10 minutes. The residual solvent was finally removed through immersion in water at 75°C for 60 min.

The carrier tube with the green membrane was subsequently put in an oven in a nitrogen atmosphere and heated up to 500°C with an increase in temperature of 50°C/h. The temperature of 500°C was maintained for 2 hours in order to entirely remove the polysulphone, after which the carrier tube was cooled down again to room temperature.

The carrier tube with the membrane was finally put in a wind furnace in view of the sintering. The temperature was increased with 250°C/h up to 1,250°C and subsequently with 50°C/h up to 1,550 °C. The latter temperature was kept constant for 1 hour, after which the oven was cooled down to room temperature.

After the cooling of the oven, a ceramic membrane with a ceramic carrier was obtained with an average pore size of 0.6 micrometer measured with a Coulter porometer. The initial values of the water flux and isopropanol flux were 8,000 and 5,500 L/hm² respectively at 25°C and 1 bar pressure difference.

According to the above-described method, as opposed to the sol/gel technique, no intermediate layer is required, but an asymmetrical structure is obtained directly on the ceramic carrier in one step.

The invention is by no means limited to the above-described embodiments; on the contrary, many changes can be made to the described embodiments within the scope of the patent application.

In particular, the ceramic powder particles do not necessarily have to be aluminium oxide.

Nor should the carrier be necessarily made of aluminium oxide. Besides, it can be made of other anorganic materials than ceramic material. It does not necessarily have to be a tube.

The binder should not necessarily be polysulphone, nor should the organic solvent necessarily be N-methyl-2-pyrrolidone.

## Claims

1. Method for forming an asymmetrical ceramic membrane, according to which a ceramic powder is applied on a porous carrier in a wet way and subsequently subject to a thermal treatment, characterized in that a suspension is made of the ceramic powder and an organic binder in a solvent in a weight ratio of the ceramic powder to the binder which is situated between 1 and 99, in that said suspension is applied on the porous carrier by means of film casting, in that the solvent is removed through extraction with a non-solvent, in that the binder is thermally removed and in that sintering is carried out.

2. Method according to the above claim, characterized in that water is used as a non-solvent.

3. Method according to any of the above claims, characterized in that a tube is used as a porous carrier.

4. Method according to any of the above claims, characterized in that a carrier made of ceramic material is used as a porous carrier.

5. Method according to the above claim, characterized in that a carrier made of any of the materials of the group of oxides, carbides and nitrides or a mixture thereof is used.

6. Method according to any of the above claims, characterized in that any of the materials of the group of oxides, carbides and nitrides or a mixture thereof is used as a ceramic powder.

7. Method according to any of the above claims, characterized in that the binder is thermally removed under inert atmosphere.

8. Method according to any of the above claims, characterized in that sintering is carried out under oxidizing atmosphere.
